# EUROPÄISCHE PATENTSCHRIFT

(11) **EP 1 954 919 B1**
(45) Veröffentlichungstag und Bekanntmachung des Hinweises auf die Patenterteilung: **23.10.2013**
(21) Anmeldenummer: 06791569.4
(22) Anmeldetag: 08.08.2006
(51) Int. Cl.: F01D 5/28, F01D 9/04, F02C 7/045, F02C 7/24

(54) **VORRICHTUNG ZUM SCHALLDÄMPFEN BEI KRAFTWERKEN**
DEVICE FOR ABSORBING SOUND IN POWER PLANTS
DISPOSITIF D'ISOLATION ACOUSTIQUE DE CENTRALES

(30) Priorität: 01.12.2005 DE 202005018803 U
(43) Veröffentlichungstag der Anmeldung: 13.08.2008
(73) Patentinhaber: Faist Anlagenbau GmbH, 86381 Krumbach (DE)
(72) Erfinder: BRAUN, Wilhelm, 89290 Buch (DE); SONNTAG, Leonhard, 86498 Kettershausen (DE)
(74) Vertreter: Müller Schupfner & Partner
(86) Internationale Anmeldenummer: PCT/EP2006/007855
(87) Internationale Veröffentlichungsnummer: WO 2007/062699

(56) Entgegenhaltungen:
- EP-A2- 0 298 898
- WO-A-97/18396
- DE-A1- 2 362 013
- DE-A1-102004 017 096
- US-A- 4 204 586
- US-A- 5 140 819
- KRÖBER, G.: "Schaufelgitter zur Umlenkung von Flüssigkeitsströmungen mit geringem Energieverlust" [Online] 17. August 1932 (1932-08-17), SPRINGER HEIDELBERG / BERLIN , ARCHIVE OF APPLIED MECHANICS (INGENIEUR ARCHIV) , XP9078516 ISSN: 1432-0681 Gefunden im Internet: URL:http://www.springerlink.com> das ganze Dokument

## Beschreibung

Bei Kraftwerken werden zur Energiegewinnung bzw. Energieumsetzung vielfach Turbinen verwendet, denen aufströmseitig ein Gas-LuftGemisch zugeführt wird. Die Zuführung von Verbrennungsluft erfolgt zweckmäßigerweise in getrennten Kanalsystemen bzw. Rohren, die innerhalb des Kraftwerks verlegt sind. Die dabei entstehenden akustischen Schallwellen sollen soweit wie möglich gedämpft bzw. gedämmt werden.

Zu diesem Zweck ist bereits eine Vorrichtung gemäß der US-4,204,586 bekannt, wonach in einem aufströmseitig der Gasturbine angeordneten Luftdurchtrittskanal kulissenartige akustische Absorber im Wesentlichen parallel zueinander angeordnet sind, so dass die anströmende Verbrennungsluft längs der Zwischenräume zwischen diesen Kulissen hindurchströmt. Es hat sich gezeigt, dass hierdurch zwar der Schall gedämmt bzw. gedämpft werden kann, derartige Kulissenabsorber führen aber zu einem erheblichen Druckverlust zwischen etwa 650 und 800 Pa, sofern nicht zu breite und zu hohe Luftdurchtrittskammern verwendet werden, was erheblichen Raumbedarf verlangt.

Aus der DE 2 362 013 ist eine Vorrichtung gemäß dem Oberbegriff des Patentanspruchs 1 bekannt, wonach eine Schalldämpfungseinrichtung hinter einer Wirbelluftreinigeranordnung angebracht ist, die Schalltafeln aufweist, die aus schalldämpfenden bzw. schallabsorbierendem Material sandwichartig aufgebaut sind.

Aus der DE 10 2004 017 096 A1 sind darüber hinaus Streben für Turbinentriebwerke bekannt, die zumindest teilweise schallabsorbierendes Material aufweisen.

Schließlich ist aus Kröber, G: "Schaufelgitter zur Umlenkung von Flüssigkeitsströmungen mit geringem Energieverlust", Springer Heidelberg/Berlin, 17. August 1932, bekannt, sogenannte "Kröber-Profile" zu nutzen, um Gas- und Flüssigkeitsströme umlenken zu können, ohne dass große Energieverluste bzw. Druckverluste auftreten.

Der Erfindung liegt die Aufgabe zugrunde, derartige Vorrichtungen dahingehend zu verbessern, dass ein wesentlich geringerer Druckverlust bei sonst etwa gleich guter Schalldämmung bzw. Schalldämpfung ohne großen Raumbedarf erreichbar ist.

Die Erfindung ist im Anspruch 1 gekennzeichnet und in den Unteransprüchen sind weitere Verbesserungen derselben beansprucht.

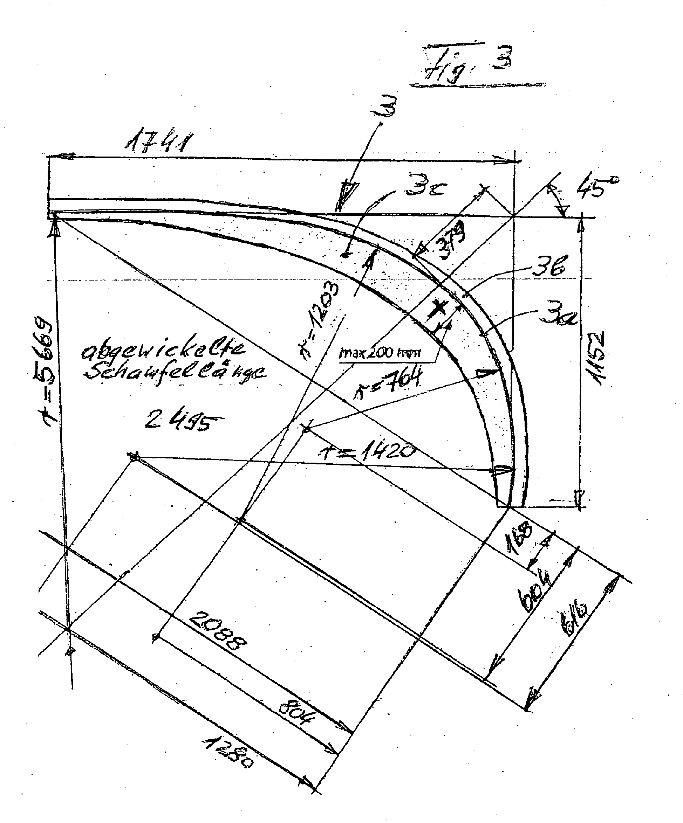

Gemäß der Erfindung werden keine im Wesentlichen flache und plane, das heißt ebene Kulissenabsorber, sondern gekrümmte Absorber verwendet. Dabei empfiehlt sich vor allem die Verwendung solcher gekrümmter Absorber, die einem so genannten "Kröber-Profil" entsprechen. Darunter versteht man:
ein komplexes z.B. für Umlenkschaufeln verwendbares Profil mit vier unterschiedlichen Radien nach dem Bemessungsschema von Figur 3. Die Abströmkante ist deutlich länger als die Anströmkante; dabei weist das Kröberprofil nur gekrümmte Begrenzungslinien statt gerader Linien auf. Die Maße beziehen sich auf die Sehnenlänge zwischen den zeichnerischen Anfangs- und Endpunkten des Gesamtprofils. Die Radien sollen bei der Herstellung gerollt, aber nicht gebogen werden.

Die gekrümmten Absorber werden gemäß der Erfindung als Umlenkeinrichtungen im Übergangsbereich zwischen einem Eingangsbereich einerseits und einem dazu winklig angeordneten Ausgangsbereich des Luftdurchtrittskanals andererseits installiert. Der Ausgangsbereich ist gegenüber dem Eingangsbereich hinsichtlich der Hauptströmungsrichtung um einen Winkel zwischen 60° und 120° insbesondere rechtwinklig, also 90° abgewinkelt angeordnet.

Die gekrümmten Absorber sind bevorzugt beidseitig mit schallabsorbierendem Material überzogen. Dabei empfiehlt sich die Verwendung von porösem Material. Es hat sich als zweckmäßig erwiesen, wenn an der konvexen Außenseite (Rückseite) der gekrümmten Absorber eine gleichmäßig dicke Absorberschicht von beispielsweise 4 cm und an der anderen konkaven Innenseite eine Absorberschicht mit unterschiedlicher Schichtdicke angebracht ist, wie dies noch näher am Beispiel der Fig. 3 gezeigt wird. Die Schichtdicke der innenseitigen Absorberschicht ist im Bereich der stärksten Krümmung etwa fünfmal so dick wie die Schichtdicke der Absorberschicht an der konvexen Seite der gekrümmten Absorber.

Die insbesondere als "Kröber-Profile" ausgebildeten gekrümmten Absorber sind diagonal in einem Winkel α von beispielsweise 45° oder 57° in der die Strömung umlenkenden Ecke des Gasdurchtrittskanals angeordnet, der im Querschnitt im Wesentlichen rechteckförmig, beispielsweise quadratisch ausgebildet sein kann.

Es hat sich gezeigt, dass bei der erfindungsgemäßen Ausbildung der Vorrichtung der Gesamtdruckverlust durch die Vorrichtung nur etwa 30 bis 35% desjenigen Wertes beträgt, der bei den bisher bekannten ebenen Absorberkulissen anzutreffen ist. Dies gilt auch dann, wenn sich jeweils an einen gekrümmten Absorber ein ebener Kulissenabsorber nicht allzu großer Länge anschließt.

Das berechnete Strömungsgeräusch ist um mehr als 10 dB leiser als das Geräusch der Schallquelle und trägt daher zu keinem Anteil an der Schall-Leistung im Ansaugbereich bei.

Der absorbierende Aufbau der Absorber besteht im Wesentlichen aus Mineralwolle hinter einer Vlies- und/oder Lochblechabdeckung. So empfiehlt sich beispielsweise die Verwendung von Lochblechen in einer Dicke von 1 mm, einem Lochabstand von 8 mm und einem Lochdurchmesser von 5 mm. Das Vlies sollte einen Strömungswiderstand von etwas 30 kPas/m² mit einer Masse pro Fläche von 0,128 kg/m² aufweisen.

Die Mineralwolle sollte einen spezifischen Strömungswiderstand von etwa 12,5 kPas/m² aufweisen.

Besonders bevorzugte Ausbildungen der Erfindung werden an Hand der Zeichnungen erläutert. Dabei zeigen:
- Fig. 1: eine schematische Ansicht einer erfindungsgemäßen Vorrichtung von der Seite nach einer Ausbildung (die Absorber sind von außen eigentlich nicht sichtbar) und
- Fig. 2: nach einer anderen Ausbildung der Erfindung.
- Fig. 3: zeigt schematisch das mit absorbierenden Schichten bedeckte "Kröber-Profil" des gekrümmten und als Umlenkeinrichtung dienenden Absorbers.
- Fig. 4: zeigt eine schematische Seitenansicht auf einen gekrümmten Absorber und
- Fig. 5: zeigt einen Aufriss auf einen Luftdurchtrittskanal, in dem im Übergangsbereich eine Reihe von gekrümmten Absorbern nebeneinander, das heißt untereinander beabstandet angeordnet sind.

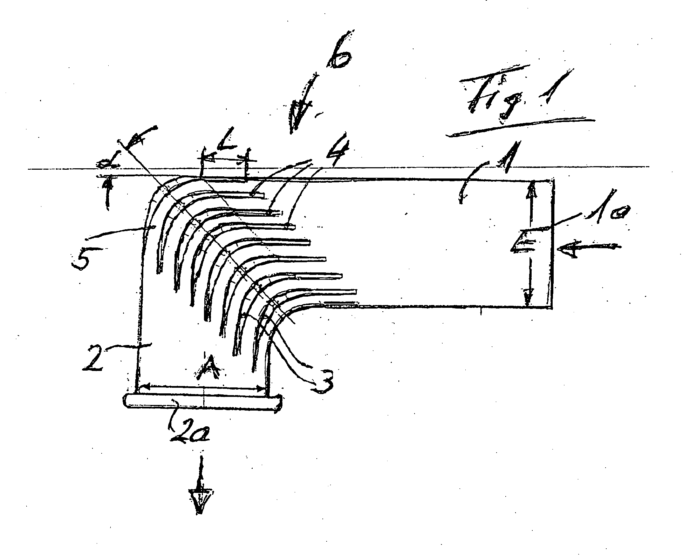

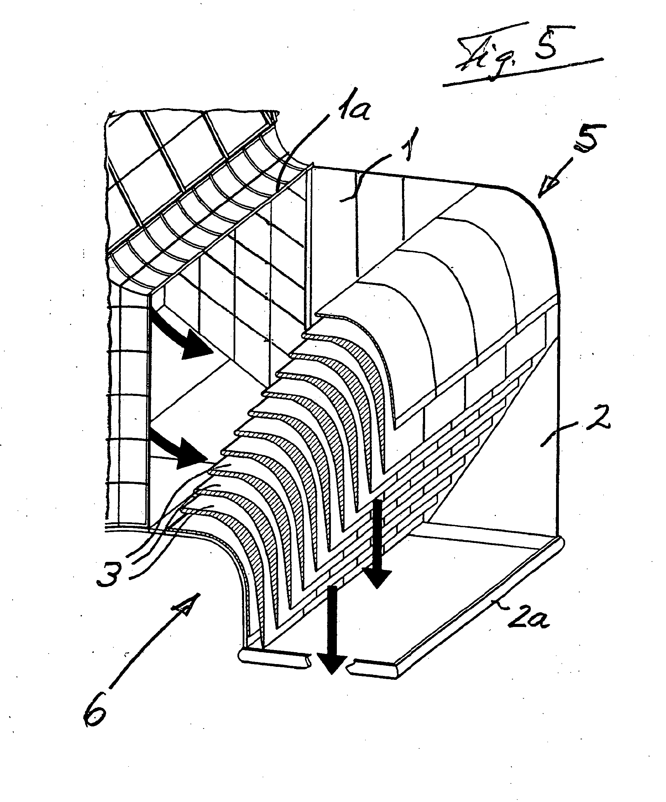

Gemäß Fig. 1 strömt die Verbrennungsluft in Pfeilrichtung durch den Luftdurchtrittskanal 6 und zwar beginnend an der Eintrittsstelle 1a über den Eingangsbereich 1 und den Übergangsbereich 5 sowie den Ausgangsbereich 2 bis zur Austrittsstelle 2a. Die Eintrittsstelle 1a kann gemäß Fig. 5 quadratisch mit einer Breite E ausgebildet sein, während die Austrittsstelle 2a mit der Breite A im Querschnitt rechteckförmig, wie in Fig. 5 gezeigt, ausgebildet sein kann. Bei der Ausbildung von Fig. 1 sind die innerhalb des Kanals 6 angeordneten gekrümmten Absorber 3, die als "Kröber-Profile" ausgebildet sind, in einem Winkel α von ca. 57° im Übergangsbereich, also der Umlenkung platziert. An die aufströmseitigen Enden der gekrümmten Absorber 3 schließen sich jeweils mit einer Länge L ebene Kulissenabsorber 4 an. Bei diesem Beispiel beträgt die Länge L 50 cm.

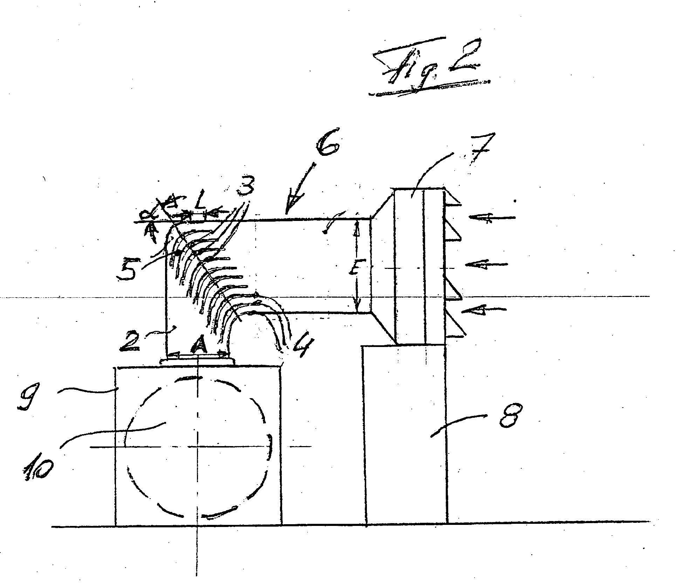

Bei der Ausbildung von Fig. 2 beträgt der Winkel α 45° und die Länge L der ebenen Kulissenabsorber 4 100 cm. Der Luftdurchtrittskanal 6 stützt sich über das Filterhaus 7 auf einem Stützpodest 8 auf und sitzt mit dem Ausgangsbereich 2 ebenfalls auf einer Stützkonstruktion auf, die sich innerhalb der Schallhaube 9 befindet, in der die Gasturbine 10 (in unterbrochener Linie angedeutet) untergebracht ist.

Der gekrümmte Absorber 3 gemäß Fig. 3 ist im Querschnitt als "Kröber-Profil" ausgebildet, und dabei ist der aus 8 mm Blech bestehende tragende Teil 3a an der Außenseite mit einer 4 cm dicken Schaumstoffschicht und an der Innenseite gleichfalls mit einer Schaumstoffschicht bedeckt, die jedoch verhautet ist. Dabei nimmt die Schichtdicke der inneren Schicht 3c vom maximalen Bereich X im Gebiet des kleinsten Krümmungsradius' r - 120,3 cm von maximal 20 cm nach außen ab.

Bei der Ausbildung von Fig. 1 mit einem Winkel α von 57° können die als Umlenkschaufeln dienenden gekrümmten Absorber Mineralwolle aufweisen, das hinter einem Vlies und einer Lochblechabdeckung eingesetzt ist. Um die Dämpfung noch weiter zu verbessern, kann an die ebenen Kulissenabsorber 4 aufströmseitige jeweils noch ein längerer Kulissenabsorber angesetzt werden. Derartige Mantelkulissen sind als Resonatoren wirkende Tiefenabsorber mit einem ringsum geschlossenen glatten Metallmantel aus 1 mm Stahlblech hergestellt, der mit Mineralwolle gefüllt ist.

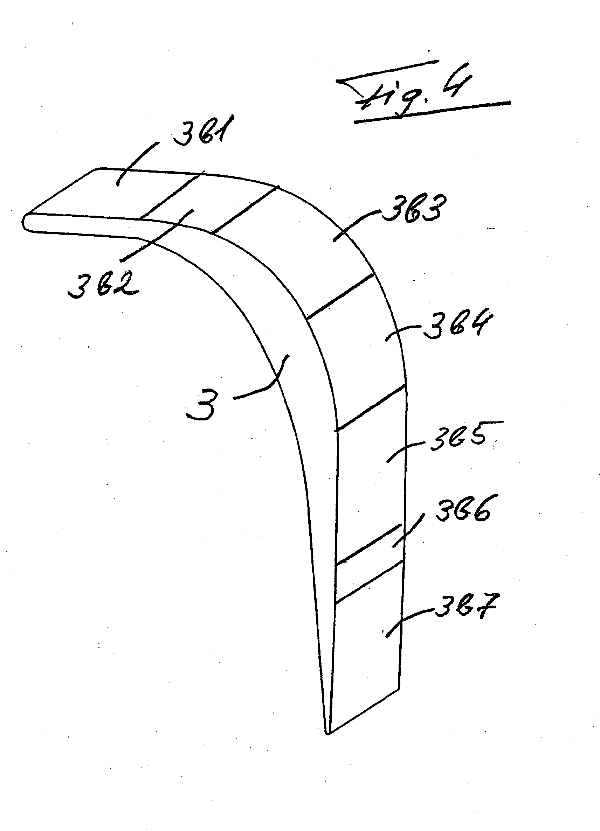

Gemäß Fig. 4 kann der gekrümmte Absorber jeweils mit Einzelsegmenten 3b1 bis 3b7 aus dem oben beschriebenen Schaumstoff bedeckt sein.

Aus Fig. 5 ist ersichtlich, wie die Absorber 3 an der Umlenkstelle, also dem Übergangsbereich zwischen dem Eingangsbereich 1 und dem Ausgangsbereich 2 des Luftdurchtrittskanals 6, angeordnet sind, so dass Luft in Pfeilrichtung durch den Eingang 1a ein- und durch den Ausgang 2a in den zur Gasturbine 10 führenden Kanal 4, hier mit rechteckförmigem Querschnitt, ausströmt.

## Patentansprüche

1. Vorrichtung zum Schalldämpfen bzw. Schalldämmen, bei dem als Umlenkeinrichtungen dienende gekrümmte Absorber (3) im Übergangsbereich (5) zwischen einem Eingangsbereich (1) und einem insbesondere um einen Winkel zwischen 60° und 120° dazu verlaufenden Ausgangsbereich (2) einer Gasdurchtrittskammer (6) angeordnet sind,
**dadurch gekennzeichnet,**
**dass** die gekrümmten Absorber (3) jeweils ein Kröber-Profil aufweisen und dass die gekrümmten Absorber (3) beidseitig mit schallabsorbierendem Material (3b, 3c) überzogen sind.

2. Vorrichtung nach Anspruch 1,
**dadurch gekennzeichnet,**
**dass** an der konvexen Aussenseite der gekrümmten Absorber (6) eine gleichmäßig dicke Absorberschicht und an der konkaven Innenseite eine Absorberschicht mit unterschiedlicher Schichtdicke angebracht ist.

3. Vorrichtung nach Anspruch 1 oder 2,
**dadurch gekennzeichnet,**
**dass** das schallabsorbierende Material Schaumstoff und/oder Mineralwolle aufweist.

4. Vorrichtung nach Anspruch 1, 2 oder 3,
**dadurch gekennzeichnet,**
**dass** die Absorber (3) Mineralwolle aufweisen, die mit Vlies und/oder gelochtem Blech abgedeckt ist.

5. Vorrichtung nach Anspruch 2 oder 3,
**dadurch gekennzeichnet,**
**dass** der gekrümmte Absorber (3) an der konvexen Außenseite mit Schaumstoff und an der konkaven Innenseite mit Schaumstoff bedeckt ist.

6. Vorrichtung nach Anspruch 4,
**dadurch gekennzeichnet,**
**dass** der Absorber an der konkaven Innenseite mit verhautetem Schaumstoff beklebt ist.

7. Vorrichtung nach einem der vorhergehenden Ansprüche,
**dadurch gekennzeichnet,**
**dass** im Anschluss (in Strömungsrichtung) an den als Umlenkeinrichtung dienenden Absorber eine Kulisse angeordnet ist, die gleichfalls schalldämpfende Eigenschaften aufweist.

## Claims

1. Device for sound damping or sound insulation, respectively, in which curved absorbers (3), serving as deflectors, are arranged in the transition region (5) of a gas passage chamber (6) between an inlet region (1) and an outlet region (2) which runs in particular at an angle of between 60° and 120° thereto,
**characterised in that**,
each of the curved absorbers (3) has a "Kröber" profile, and that the curved absorbers (3) are covered on both sides with sound-absorbing material (3b, 3c).

2. Device according to claim 1,
**characterised in that**,
the convex, outer side of the curved absorbers (6) has an absorptive layer of uniform thickness applied to it and the concave, inner side has an absorptive layer of varying thickness.

3. Device according to claim 1 or 2,
**characterised in that**,
the sound-absorbing material comprises foamed material and/or mineral wool.

4. Device according to claim 1, 2 or 3,
**characterised in that**,
the absorbers (3) comprise mineral wool covered with fleece material and/or a perforated metal sheet.

5. Device according to claim 2 or 3,
**characterised in that**,
the convex, outer side of the curved absorber (3) is covered with foamed material and the inner, concave side is covered with foamed material.

6. Device according to claim 4,
**characterised in that**,
the absorber is laminated on its concave, inner side with skinned foam.

7. Device according to one of the preceding claims,
**characterised in that**,
the absorber, which serves as a deflector, is followed (in the flow direction) by a baffle that likewise exhibits sound-damping properties.

## Revendications

1. Dispositif pour amortir les bruits ou pour absorber les bruits respectivement, dans lequel des éléments absorbeurs incurvés (3) servant de moyens de déflexion sont agencés dans la zone de transition (5) entre une zone d'entrée (1) et une zone de sortie (2), s'étendant en particulier sous un angle entre 60° et 120° par rapport à la première, d'une chambre de traversée de gaz (6),
**caractérisé en ce que**
les éléments absorbeurs incurvés (3) présentent chacun un profil dit de "Kröber", et **en ce que** les éléments absorbeurs incurvés (3) sont revêtus sur les deux côtés d'un matériau (3b, 3c) absorbant les bruits.

2. Dispositif selon la revendication 1,
**caractérisé en ce qu'**une couche d'absorption d'épaisseur régulière est appliquée sur la face extérieure convexe des éléments absorbeurs incurvés (6), et une couche d'absorption avec épaisseur de couche différente est appliquée sur la face intérieure concave.

3. Dispositif selon la revendication 1 ou 2,
**caractérisé en ce que** le matériau absorbant les bruits comprend une mousse et/ou une laine minérale.

4. Dispositif selon la revendication 1, 2 ou 3,
**caractérisé en ce que** les éléments absorbeurs (3) comprennent une laine minérale qui est recouverte avec un non-tissé et/ou avec une tôle perforée.

5. Dispositif selon la revendication 2 ou 3,
**caractérisé en ce que** l'élément absorbeur incurvé (3) est recouvert de mousse sur la face extérieure convexe et est recouvert de mousse sur la face intérieure concave.

6. Dispositif selon la revendication 4,
**caractérisé en ce que** l'absorbeur est collé sur la face intérieure concave avec une mousse couverte d'une peau.

7. Dispositif selon l'une des revendications précédentes,
**caractérisé en ce qu'**une glissière est agencée à la suite, en direction d'écoulement, de l'absorbeur servant de moyen de déflexion, ladite glissière présentant également des propriétés d'amortissement des bruits.
